Europäisches Patentamt

European Patent Office

Office européen des brevets

(11) Publication number: 0 234 669

A2

# EUROPEAN PATENT APPLICATION

(21) Application number: 87300022.8

(22) Date of filing: 05.01.87

(51) Int. Cl.³: C 23 C 26/00
C 21 D 1/70, C 21 D 8/12

(30) Priority: 07.01.86 US 816765

(43) Date of publication of application:
02.09.87 Bulletin 87/36

(84) Designated Contracting States:
AT BE CH DE ES FR GB GR IT LI LU NL SE

(71) Applicant: MORTON THIOKOL, INC.
110 North Wacker Drive
Chicago Illinois 60606(US)

(72) Inventor: Patton, Richard A.
38 North Belgian Road
Danvers Massachusetts 01923(US)

(72) Inventor: Beekman, George F.
346 Cabot Street
Beverly Massachusetts 01915(US)

(74) Representative: Bankes, Stephen C. D. et al,
Baron & Warren 18 South End Kensington
London W8 5BU(GB)

(54) Mixture of magnesium oxide and a zirconium compound as a separating coating for annealing silicon steel.

(57) A zirconium compound such as zirconium sulfate is added to a magnesium oxide separating coating composition. The composition is applied to decarburized regular silicon steel or high permeability silicon steel as a coating, then the steel is coiled and box annealed to orient its grain structure in the machine direction, thereby increasing its magnetic permeability. The coating isolates the coils of steel during annealing to prevent welding, and provides an electrically resistive glassy coating on the steel following the box annealing process. The presence of zirconium in the coating composition reduces the core loss of the processed steel, prevents oxidation of the steel during the process, and improves the chemical resistance of the steel to phosphate secondary coatings which are commonly applied after the box annealing step is complete.

0234669

## MIXTURE OF MAGNESIUM OXIDE AND A ZIRCONIUM COMPOUND AS A SEPARATING COATING FOR ANNEALING SILICON STEEL

This invention relates to metal treatment compositions, and more particularly to a separating coating composition for separating and interacting with coils of regular or high permeability silicon steel during a box annealing process. The purpose of the box annealing process is to provide an oriented grain structure in the steel while leaving a durable residual coating of forsterite -- also known as "mill glass" -- having high electrical resistance. The coated steel is formed into plates which are stacked to form laminated transformer cores and other inductive elements. The forsterite coating electrically isolates adjacent plates, reducing the layer-to-layer eddy currents caused by exposure of the inductive elements to varying magnetic fields.

Regular grain oriented steel is rolled silicon steel containing no more than 0.085% carbon, about 2-4% silicon, about 0.02-0.2% manganese, and about 0.015-0.07% sulfur, selenium, or both, specially treated to orient its grain structure and thereby increase its permeability in the machine direction. Regular grain-oriented steel has a permeability of less than 1870 and a core loss of somewhat more than about 0.7 watts per pound (1.5 watts/kg), measured at a magnetic field intensity of 1.7 teslas and a frequency of 60 Hertz. (Core loss varies with the gauge of the steel, and is greater for thicker steel.) High permeability grain-oriented steel contains about the same amounts of silicon, carbon, manganese, sulfur, and selenium as regular grain-oriented steel, and also about .01 to .065% aluminum and about .003 to .010% nitrogen. High permeability grain-oriented steel has a permeability of more than 1870 and a core loss of less than 0.7 watts per pound (1.5 watts/kg.).

An overview of the process for making grain-oriented silicon steels follows. First, the essential ingredients are melted together in an electric air furnace. Silicon is added as ferrosilicon, typically to provide about 3.5% silicon. Sulfur is added as a metal sulfide, typically iron pyrite ($FeS_2$). For high permeability silicon steel, aluminum and nitrogen are added in the form of aluminum nitride. A small amount of carbon (an impurity) is introduced by the electrodes of the furnace. Once the composition of the melt is established, it is cast into ingots or as a continuous slab. The slab or reheated ingot is then hot rolled to a thickness of about 3/16 of an inch (about 5 millimeters). Following an annealing process (not to be confused with box annealing), the strip is cooled and cold rolled to gauge. A typical gauge for grain-oriented steel is from 7-14 mils (from about .18 to about .36 millimeters).

A decarburizing anneal step follows cold rolling. This step is needed to reduce the carbon content of the steel to meet the previously stated specifications. Decarburization is effected by heating the steel sheet to 800°C under wet hydrogen for about 5 minutes. In this step, "wet hydrogen" indicates an atmosphere having a ratio of the partial pressure of water vapor to the partial pressure of hydrogen of about 0.35. This atmosphere reduces iron but oxidizes silicon on the surface of the silicon steel to silicon dioxide.

Following the decarburizing step, about 1.0-1.2 pounds of the coating composition of magnesium oxide and other additives is suspended in each gallon of water (0.12-0.14 kilograms per liter of water), using a high shear mixer, and the steel sheet is coated on each side with an aqueous slurry or suspension. The coating is then dried and the coated steel is rolled into a coil for box annealing.

During the box annealing or grain orienting step (this step is sometimes referred to hereinafter as simply an "annealing" step), the coated steel is placed in an annealing furnace where it is slowly brought to 2200°F (1200°C) in a atmosphere of nitrogen and hydrogen or dissociated ammonia, then slowly allowed to cool in a dry hydrogen atmosphere. Box annealing requires 4 to 5 days. During annealing, the magnesium oxide in the coating gives up its water of hydration; this small amount of water catalyzes the formation of forsterite ($2 MgO \cdot SiO_2$) by the reaction of magnesium oxide in the coating with the silica coating formed on the steel during the decarburizing step. (Some of the silica coating might also be formed during box annealing, as a result of a reaction of silicon in the steel with oxygen formed by dissociation of the water of hydration driven from the magnesium oxide coating). The purpose of controlling the box annealing atmosphere is to insure that the atmosphere remains reducing to iron, thus preventing oxidation of iron by the water in the annealing atmosphere.

The magnesium oxide constituent of the separating coating has an important bearing on the success of the box annealing step. First, the magnesium oxide comprising the majority of the coating prevents adjacent coils of steel from welding together during annealing, and thus becoming inseparable. Second, magnesium oxide scavenges the sulfur, boron, nitrogen, and oxygen which are released during annealing. Third, magnesium oxide acts as a lubricant, allowing the coils to slide relative to each other to relieve thermal stresses as the rolls are heated and cooled.

The magnesium oxide separating coating can be supplemented by oxidizing agents, which contribute to the oxidation of free silicon or the surface of the steel following decarburization. The known oxidizing agents include chromic oxide, manganese oxides, calcium phosphates and the like. These oxidizing agents selectively oxidize silicon to silica, without tending to oxidize iron. The result is improved adherence of the forsterite coating and a more uniform coating thickness.

Another known category of additives to the magnesium oxide separating coating is that of primary crystal growth inhibitors. The annealing process may be divided into a first stage in which dissociated ammonia is the atmosphere, the temperature is less than about 800°C, and the water of hydration from the magnesium oxide is released, and a second, drier stage in which the atmosphere is essentially dry hydrogen. Recrystallization which occurs in the first stage is known as primary grain growth, and recrystallization which occurs in the second stage is known as secondary grain growth. (Primary grain growth also occurs during the decarburizing step.) Primary grain growth is an indiscriminate and ron-selective growth of grains having random orientations. This indiscriminate grain growth is undesirable. During secondary grain growth, which is the objective of the annealing step, the grains propagate in the desired orientation, which is sometimes known as the "cube-on-edge" or (110)[001] crystal orientation. Secondary grain growth primarily occurs between about 815°C and 870°C, although the final annealing temperature is higher to further improve the crystal texture and to promote the removal of impurities from the metal. To selectively inhibit primary grain growth while promoting secondary grain growth, primary grain growth inhibiting agents can be introduced during the primary grain growth stage and removed during the secondary grain growth stage. Primary grain growth inhibitors are commonly incorporated both in the initial melt and in the magnesium oxide coating. The principal primary grain growth inhibitors are compounds of boron, nitrogen, titanium, sulfur, or phosphorus.

Several species are undesirable in magnesium oxide coatings or steel compositions subjected to grain orientation by box annealing, and the art has learned to avoid them. Three such materials are carbon in any form, such as free carbon, carbonate, or carbide; sulfites (which attack the forsterite coating under annealing conditions); and halogens (which also attack the forsterite coating under annealing conditions).

Following the box annealing step, the coated steel is uncoiled, scrubbed to remove loose magnesium oxide, optionally treated with a secondary coating such as monobasic or dibasic calcium, magnesium or aluminum phosphate, and heat flattened by heating it under tension to relieve stresses in the steel. The secondary coating step has often proven necessary if the coating of forsterite was imperfect, which often has been the case in prior practice. The phosphate reacts with magnesium oxide to eliminate discontinuities in the forsterite glass and increase the resistance of the coating.

An extensive study of the prior art has revealed only one reference which discloses the use of a zirconium compound, either in the melt or as part of the magnesium oxide coating applied prior to the box annealing step. That reference is U.S. Patent No. 4,543,134, issued September 24, 1985 to Tanaka. It teaches the alternative use of zirconium chloride in an annealing separator. Although this patent is assigned to a steel company, the steel industry has generally specified low halogen levels in separating coating compositions.

A first object of the invention is to increase the magnetic permeability of silicon steels, thereby optimizing their performance in inductive laminates. A second object of the invention is to increase the adherence, integrity, and therefore the electrical resistance of the finished glassy coating without increasing its thickness. The thinner the finished coating is, the more permeable the laminated core will be to magnetic flux. A third object of the invention is to increase the resistance of the final grain-oriented steel to sub-surface oxidation. A fourth object of the invention is to increase the resistance of the primary (forsterite) coating against attack by the acidic phosphate secondary coatings which are commonly employed. A fifth object of the invention is to reduce or eliminate the necessity for secondary coatings. A sixth object of the invention is to minimize the loss on ignition of the magnesium oxide coating as applied. (Loss on ignition is a measurement of the degree of hydration of the magnesium oxide coating, and is desirably minimized to minimize the amount of water present during annealing.) Other objects of the invention will be apparent from the disclosure which follows.

A first aspect of the invention is a separating coating composition comprising a major proportion of magnesium oxide and from about 0.05 to about 5 parts by weight of zirconium ions, provided in the form of at least one zirconium salt, per 100 parts magnesium oxide. ("Parts by weight per 100 parts magnesium oxide" is abbreviated as "phm" hereafter.) The composition may optionally contain from 0 to about 10 phm of a nonzirconium primary grain growth inhibitor, and from 0 to about 12 phm of a nonzirconium oxidizing agent. The addition of a zirconium compound as indicated decreases the watt. loss of the steel and reduces the loss on ignition of the dry coating.

A second aspect of the invention is a separating coating fluid comprising a water dispersion (possibly including some components in suspension and other components in solution) of the composition described in the preceding paragraph.

A third aspect of the invention is the reaction product of the composition first described above and silicon steel under box annealing conditions. This product consists essentially of forsterite and zirconia (zirconium oxide), and has improved electrical and magnetic properties. The resulting coating is also claimed.

Still another aspect of the invention is the reaction product just described, disposed as an electrical resistance coating on a grain-oriented silicon steel substrate.

Separating coating compositions according to the present invention are mixtures of a major proportion of magnesium oxide, a minor proportion of zirconium (provided as a zirconium salt), and optionally minor proportions of a nonzirconium primary grain-growth inhibitor and a nonzirconium oxidation agent. For the purpose of distinguishing zirconium compounds which also function as inhibitors or oxidizing agents from nonzirconium compounds having these functions, the zirconium compounds and nonzirconium compounds are separately identified and claimed. A description of each component of the separating coating is provided below.

Magnesium Oxide

The magnesium oxide specified for use herein comprises a major proportion, preferably about 73%-99.95% by weight, of the composition. The proportions of all other ingredients of the composition are defined in terms of the amount by weight of magnesium oxide, so the proportion of magnesium oxide is always considered herein to be 100 parts by weight.

The magnesium oxide should contain minimal amounts of carbon, halogens, and sulfite ions. A typical starting material should have a chloride concentration of no larger than about .04% by weight, a sulfite concentration of no more than about 0.2% by weight, and preferably less of each. Minor amounts of impurities such as calcium oxide, boron compounds, phosphorus compounds, sulfates, silica, iron, and other noninterfering materials are acceptable herein.

The particles of magnesium oxide should be small enough to provide an essentially continuous coating on the steel, but large enough (providing a small enough surface area per unit weight of the magnesium oxide) that the magnesium oxide does not hydrate extensively while dispersed in water to facilitate the coating step. Following the coating and drying steps, the magnesium oxide should preferably be no more than about 4% hydrated, which corresponds to a loss on ignition value of less than about 2% of the weight of the coating. This low hydration rate is provided by magnesium oxide which has an average surface area of about 12-25 square meters per gram. One contemplated form of magnesium oxide is a bimodal mixture of particles less than 5 microns in diameter and 10-15 micron particles. Another contemplated mixture is one containing roughly 30% particles smaller than 1 micron, 25% 1-2 micron particles, 35% 2-5 micron particles, and 10% 5-10 micron particles. Some practitioners prefer these bimodal materials, while others do not.

The citric acid activity (CAA) of a magnesium oxide feedstock indicates the rate at which the oxide will neutralize citric acid, expressed in seconds. Citric acid activity is used to determine whether a particular magnesium oxide feedstock hydrates slowly enough to be usable in a separating coating. The CAA of magnesium oxide feedstocks contemplated for use herein is desirably from about 50 to about 120 seconds.

In general, the characteristics of the magnesium oxide recited here are those which have been found successful in prior practice. A commercial source of suitable magnesium oxide is the "83 B" product sold by the Ventron Division of Morton Thiokol, Inc., Danvers, Massachusetts.

Zirconium Salt

The second essential constituent of the present separating coating composition is from about 0.05 to about 5 phm, preferably from about 0.1 to about 0.5 phm, most preferably about 0.3 phm, of zirconium ions, provided in the form of at least one zirconium salt. (The weight proportions recited here are for the zirconium component of the salt only, without considering the weight of the anion.) The zirconium salt is contemplated to have two effects, one being due to the presence of zirconium, and the other being due to the presence of one or more selected anions in the zirconium salt. The function of the zirconium ion is to form zirconium oxide, silicate, and/or phosphate under annealing conditions. The presence of zirconium compounds in the coating is believed to increase the adhesion of the coating to the steel substrate. Glass containing zirconium is also believed to form a more impervious coating having higher electrical resistance and more resistance to attack by a secondary phosphate coating than conventional coating compositions provide in the finished glass. Finally, the presence of zirconium might improve the color of the finished glass.

Most broadly, the anion constituent of the zirconium salt can be any anion which does not contribute an undesired species such as halogen, sulfite, or any form of carbon to the magnesium oxide coating. The following zirconium salts are specifically contemplated:

zirconium sulfate;
zirconium sulfide
zirconium hydroxide;
zirconium nitrate;
zirconium nitride;
zirconium phosphide;
zirconium phosphate;
zirconium chromate;
zirconium selenate;
zirconium selenite;
zirconium orthosilicate;
zirconium boride;
zirconium oxide; and
mixtures thereof

In one preferred embodiment of the invention, the zirconium salt is water dispersible. Of the above listed salts, the nitrate, selenate, sulfate, hydroxide (including the indefinitely hydrated hydroxide known to the art as a "hydrogel"), and mixtures thereof are contemplated. All these materials but the hydroxide are water soluble, and the latter is water dispersible.

Another preferred category of zirconium salts are those including an oxidizing anion. Of the above species, selenate, selenite, nitrate, phosphate, chromate, and combinations thereof are believed to be capable of selectively oxidizing silicon without oxidizing iron under annealing conditions.

Another contemplated class of zirconium salts are those which include a primary grain growth inhibiting anion. Any anion which releases or promotes the release of nitrogen, sulfur, titanium, or boron, particularly sulfur or boron, is contemplated for use herein. Specific anions of this kind are phosphide, sulfide, sulfate, nitride, phosphide, boride, borate, metaborate, selenide, and combinations thereof.

It will be noted that some anions, particularly borates and sulfate, provide both oxidizing and primary grain growth inhibiting species in the annealing furnace.

A preferred zirconium salt for use herein is zirconium sulfate in any of its hydration states, for example, anhydrous zirconium sulfate, zirconium sulfate tetrahydrate, or zirconium sulfate octahydrate. Under annealing conditions a zirconium oxide, silicate, or phosphate is formed and becomes combined with the forsterite primary coating material. Besides providing oxygen due to its decomposition, the sulfate anion reacts with hydrogen in the annealing furnace to provide hydrogen sulfide, which diffuses into the steel to prevent primary grain growth. Following the conclusion of the primary grain growth phase of annealing, the hydrogen sulfide is scavenged by the magnesium oxide, forming magnesium sulfide which is readily removed during the scrubbing step following annealing. The zirconium sulfates are further preferred because they are water soluble. Of the three common hydration states of zirconium sulfate, the tetrahydrate is preferred.

## Nonzirconium Primary Grain Growth Inhibitor

In addition to a zirconium salt providing this function, a nonzirconium salt which inhibits primary grain growth can also be incorporated in the present composition as from 0 to about 10 phm of the composition. A preferred concentration of the nonzirconium primary grain growth inhibitor is from about 0.1 to about 5 phm. Broadly, these primary grain inhibitors include boric oxide; ammonium, metal, and hydrogen salts of borides, borates, metaborates, sulfides, sulfates, phosphides, nitrides, selenides, and phosphides; and combinations thereof. ("Hydrogen salts" as used herein refers to cationic hydrogen analogs of metal salts, rather than to hydrides or other compounds of anionic hydrogen.) In particular, the salts of any of the indicated anions and hydrogen, alkaline earth metals (particularly calcium and magnesium), titanium, and combinations thereof are contemplated for use herein. Some of the nonzirconium oxidizing agents also have utility as primary grain growth inhibitors.

The preferred nonzirconium primary grain growth inhibitors are boron compounds such as borates, borides and metaborates, specifically, boric oxide, boric acid, sodium metaborate, and others, as 0.1 to 1 phm of the compositions. A particular contemplated species is boric acid.

Nonzirconium Oxidizing Agents

In addition to oxygenated zirconium salts mentioned previously, various nonzirconium oxidizing agents may also be present. The composition can desirably contain from 0 to 12 phm, preferably 2 to 7 phm, most preferably about 5 phm of a nonzirconium oxidizing agent. Most broadly, these may be the metal, ammonium, or hydrogen salts of oxides, selenates, selenites, nitrates, phosphates (including monobasic, dibasic, and tribasic phosphates), chromates, and combinations thereof. Preferred cations are the alkaline earth metals, principally magnesium and calcium, as well as titanium. Some of the nonzirconium primary grain growth inhibitors also have utility as oxidizing agents. Specific nonzirconium oxidizing agents contemplated herein are calcium monophosphate, calcium diphosphate, chromic oxide, manganese monoxide, manganese dioxide, metal permanganates, and mixtures thereof.

## Miscellaneous Additives

In addition to those additives just described, various other materials may be added to the magnesium oxide composition for special purposes. Titanium can be added as titanium oxide, optionally in conjunction with manganese oxide, the former as 5 to 25 phm, preferably 2 to 4 phm, and the latter as 5 to 10 phm, to scavenge aluminum in high permeability silicon steel. Calcium oxide may be added to the magnesium oxide composition as 0.5 to 2 phm, preferably 0.5 to 1 phm of the composition. When hydrated, such amounts of calcium oxide can improve green adherence and upon dehydration during the anneal can contribute a trace of water to catalyze forsterite formation. (See U.S. Patent No. 2,590,566.) Higher concentrations of calcium oxide in the coating can form undesirable calcium carbonate if exposed to carbon dioxide in the atmosphere or elsewhere.

The addition of lithium compounds, such as lithium metaborate, is contemplated to improve the electrical resistance of the forsterite coating, as well as providing a source of boron.

The addition of nitrides, such as the nitrides of chromium, vanadium, and titanium, is contemplated to increase the uniformity of the magnetic properties of high permeability silicon steel.

## Preferred Magnesium Oxide Composition

Preferred compositions according to the present invention comprise from about 92% to about 97.5% by weight magnesium oxide, about 1% by weight of zirconium sulfate tetrahydrate as the zirconium salt, about 1% by weight of boric acid as the nonzirconium inhibitor, and 0.5% calcium oxide. In one particular composition 92.5 percent by weight magnesium oxide and 5 percent of a mixture of equal parts calcium monophosphate and calcium diphosphate (by weight) are present. In another preferred composition 97.5 percent magnesium oxide and no calcium phosphate are present.

## Water Dispersion

The separator coating composition contemplated herein is stored as a powder until just before use is intended, at which time it is quickly dispersed in water using a high shear mixer, coated onto the steel, and dried. From the time the magnesium oxide is first wet until the coating is dried on the steel, it is preferred that no more than about 20 or 30 minutes should elapse. (The acceptable residence time of the coating dispersion can vary from 10 minutes to 8 hours, depending on the water temperature and the CAA of the magnesium oxide. Cooler water and a CAA of 50-120 seconds will inhibit hydration.) The typical proportion of solids in the dispersion is about 1 to about 1.4 pounds per gallon (0.12 to 0.14 kg/l).

Reaction Product

The reaction product of the magnesium oxide and zirconium salt composition with silicon steel is believed to consist essentially of forsterite and one or more of zirconium phosphate, silicate, and oxide. The coating is a uniform, glassy combination of forsterite and the zirconium compound(s). When silicon steel is coated, annealed, and further treated as indicated herein, the reaction product of the present magnesium oxide coating composition with silicon steel is disposed as an electrical resistance coating on a grain oriented silicon steel substrate.

Example I

Magnesium oxide formulations A and B were prepared. In formulation A (a conventional magnesium oxide coating composition) 1200 grams of magnesium sulfate heptahydrate were combined with 50 pounds (22.7 kg.) of magnesium oxide in 40 gallons (151 liters) of water. In composition B, according to the present invention, 865 grams of zirconium sulfate tetrahydrate were added to 50 pounds (22.7 kg.) of magnesium oxide and 40 gallons (151 liters) of water (providing 0.97 phm of zirconium ions). The magnesium sulfate was added to formulation A so each composition would have equal (molar) amounts of sulfate, thus equalizing the amount of primary grain growth inhibition expected to be provided by each composition. In each case, the magnesium oxide was an annealing grade oxide sold as "83 B" by the Ventron Division of Morton Thiokol, Inc. The steel employed here was a coil of 7 mil (0.18 mm) decarburized regular grain oriented steel, and the coating weight employed was typical for 7 mil (0.18 mm) stock -- between 0.015 and 0.025 ounces per square foot per side (4.6 to 7.7 grams per square meter per side). The figures provided in Table I for Composition A are the statistical average of measurements made during a commercial coating operation, while the figures for Composition B are based on one test (excepting the loss on ignition, which was based on four tests). In interpreting the data of Table I, one should be aware that the steel fabrication art considers a core loss difference of 0.006 watts per pound (.013 watts /kg) to be a significant difference in performance of the coating. The average difference here is 0.05 watts per pound (.11 watts/kg.) more than eight times the minimum significant core loss difference. Thus, the improvement in core loss here is quite large. The inventors attribute this improvement both to higher resistivity of the coating for a given thickness and to better adhesion of the glass coating to the steel.

Example II

In this example, the performance of magnesium oxide combined with calcium phosphate was compared to the performance of magnesium oxide containing zirconium sulfate tetrahydrate and calcium phosphate as additives. Composition C was "83 B" magnesium oxide containing 8 phm of calcium phosphate (50% monophosphate and 50% diphosphate). Composition D is the same material, but with 1.2 phm of zirconium as zirconium sulfate tetrahydrate added. The respective oxides were suspended at a concentration of 1.3 pounds per gallon (156 grams per liter) in water and promptly coated on strips of decarburized 11 mil (0.28 mm thickness) regular grain oriented silicon steel from each of two separate batches. Strips of the respective compositions were stacked separately to simulate coiling of the steel, and the stacks were then hydrogen annealed in the usual manner.

Immediately following the anneal, loose residue was scrubbed from the strips and core losses were measured. The samples were then coated with a secondary acidic phosphate coating which is a mixed magnesium aluminum phosphate in phosphoric acid, sold by Armco Steel Corporation under the trademark "CARLITE". (Its composition is not known to the present inventors.) The strips were heated to 1000°C in contact with air to determine their oxidation resistance (estimated by determining the amount of black iron oxide formed). Adherence of the respective glasses to the substrates was determined by bending a 4 inch by 12 inch (10 by 30 cm) coated test strip over a one inch (2.5 cm) diameter mandrel, then estimating visually the percent of coating that flaked off. 0-5% is good, 5-10% fair, over 10% poor.

No difference in magnetic properties was observed after the secondary coating was applied. The inventors attribute this to the calcium phosphate additives in the magnesium oxide composition. Composition D gave glass that was more resistant to oxidation and the acidic secondary coating, and that adhered better to the base steel after the secondary coating than the glass formed by Composition C.

## TABLE I

| Additive | A<br>magnesium<br>sulfate<br>heptahydrate | B<br>zirconium<br>sulfate<br>tetrahydrate |
|---|---|---|
| Wt.% sulfur, dry coating | 0.79% | 0.76% |
| Loss on ignition, dry coating | 2.9% | 1.8% |
| Watt loss per pound*:front<br>(per kg): | 0.672<br>(1.48) | 0.641<br>(1.41) |
| back | .708<br>(1.56) | .639<br>(1.41) |
| average | .690<br>(1.52) | .640<br>(1.41) |

*(17 K Gauss, 60 Hz)

## CLAIMS

1. A separating coating composition comprising:

A. a major proportion of magnesium oxide;

B. from 0.05 to 5 parts by weight of zirconium ions, provided as at least one zirconium salt, per 100 parts of magnesium oxide;

C. from 0 to 10 parts by weight of a non-zirconium primary grain growth inhibitor per 100 parts of magnesium oxide; and

D. from 0 to 12 parts by weight of a non-zirconium oxidizing agent per 100 parts of magnesium oxide.

2. A composition according to claim 1, wherein said zirconium salt is selected from zirconium sulfate, sulfide, hydroxide, nitrate, nitride, phosphide, phosphate, chromate, selenate, selenite, orthosilicate, boride, oxide, and mixtures thereof.

3. A composition according to claim 2, wherein said zirconium salt is a water-dispersible salt selected from zirconium nitrate, selenate, sulfate, hydroxide, and mixtures thereof.

4. A composition according to claim 3, wherein said zirconium salt is a water-soluble salt selected from zirconium nitrate, selenate, sulfate, and mixtures thereof.

5. A composition according to claim 4, wherein said zirconium salt is zirconium sulfate tetrahydrate.

6. A composition according to claim 2, wherein said zirconium salt is the salt of an oxidizing anion selected from selenate, selenite, nitrate, phosphate, chromate, and combinations thereof.

7. A composition according to claim 2, wherein said zirconium salt is the salt of a primary grain growth inhibiting anion selected from phosphide, sulfide, sulfate, nitride, phosphide, boride, borate, metaborate, selenite, and combinations thereof.

8.    A composition according to any preceding claim, wherein said nonzirconium primary grain growth inhibitor is selected from boric oxide; metal, ammonium, and hydrogen salts of borides, borates, metaborates, sulfides, sulfates, nitrides, and phosphides; and combinations thereof.

9.    A composition according to claim 8, wherein the cations of said metal salts are selected from titanium, alkaline earth metals, and combinations thereof.

10.    A composition according to claim 8 or claim 9, wherein said nonzirconium primary grain growth inhibitor comprises at least one boron compound.

11.    A composition according to any preceding claim, wherein said nonzirconium oxidizing agent is selected from metal, ammonium, and hydrogen salts of nonwater oxides, selenates, selenites, nitrates, phosphates, chromates, permanganates, and combinations thereof.

12.    A composition according to claim 11, wherein said non-zirconium oxidizing agent is a salt of a cation selected from alkaline earth metals and titanium.

13.    A composition according to claim 11, wherein said non-zirconium oxidizing agent is selected from chromic oxide, manganese oxides, metal permanganates, and mixtures thereof.

14.    A composition according to any preceding claim, which is essentially free of carbon, halogens, and sulfites.

15.    A composition according to any preceding claim, comprising from 0.1 to 0.5 parts by weight of said zirconium ions per 100 parts of magnesium oxide.

16.    A composition according to claim 15, comprising about 0.3 parts by weight of said zirconium ions per 100 parts of magnesium oxide.

17. A composition according to any preceding claim, comprising from 0.1 to 5 parts by weight of said non-zirconium primary grain growth inhibitor per 100 parts of magnesium oxide,

18. A composition according to claim 17, comprising about 1 part by weight of said primary grain growth inhibitor per 100 parts of magnesium oxide.

19. A composition according to any preceding claim, comprising from 2 parts to 7 parts by weight of said non-zirconium oxidizing agent per 100 parts of magnesium oxide.

20. A composition according to claim 19, comprising about 5 parts by weight of said nonzirconium oxidizing agent per 100 parts of magnesium oxide.

21. A composition according to any preceding claim, comprising from 76% to 99.95% by weight magnesium oxide.

22. A composition according to any preceding claim, further comprising from 0.5 to 2 parts of calcium oxide per 100 parts of magnesium oxide.

23. A composition according to claim 22, comprising from 0.5 to 1 part of calcium oxide per 100 parts of magnesium oxide.

24. A composition according to any preceding claim, comprising:

    A. from 92 to 97.5 percent by weight magnesium oxide;

    B. as said zirconium salt, about 1 percent by weight zirconium sulfate, expressed as the weight of zirconium sulfate tetrahydrate;

    C. as said nonzirconium primary grain growth inhibitor, about 1 percent by weight of boric acid; and

    D. about 0.5 percent by weight calcium oxide.

25. A composition according to claim 24, comprising about 92.5 percent by weight magnesium oxide and about 5 percent by weight calcium phosphate.

26. A composition according to claim 25, wherein said calcium phosphate comprises a mixture of calcium monophosphate and calcium diphosphate.

27. A composition according to claim 24, comprising about 97.5 percent by weight magnesium oxide.

28. A separating coating fluid comprising a dispersion in water of a composition according to any preceding claim.

29. The reaction product, produced under box annealing conditions, of a composition according to any one of claims 1 to 27 and silicon steel.

30. A reaction product according to claim 29, disposed as an electrical resistance coating on a grain oriented silicon steel substrate.

31. A glassy coating consisting essentially of forsterite and a zirconium compound.